# EUROPÄISCHE PATENTSCHRIFT

(11) **EP 1 503 126 B1**
(45) Veröffentlichungstag und Bekanntmachung des Hinweises auf die Patenterteilung: **21.12.2005**
(21) Anmeldenummer: 04017293.4
(22) Anmeldetag: 22.07.2004
(51) Int. Cl.: F16L 9/12, F16L 9/147, E04C 3/28, E04C 3/36, B29C 63/18

(54) **Rohrkörper und Verfahren zu seiner Herstellung**
Tubular body and manufacturing method thereof
Corps tubulaire et son procédé de fabrication

(30) Priorität: 01.08.2003 DE 10335233
(43) Veröffentlichungstag der Anmeldung: 02.02.2005
(73) Patentinhaber: Deutsches Zentrum für Luft- und Raumfahrt e.V., 53175 Bonn (DE)
(72) Erfinder: Hausmann, Joachim, 50670 Köln (DE); Leyens, Christoph, 53639 Königswinter (DE)
(74) Vertreter: von Kreisler Selting Werner

(56) Entgegenhaltungen:
- DE-C- 4 408 444
- US-A- 4 171 626

## Beschreibung

Die Erfindung betrifft einen Rohrkörper aus einem faserverstärkten Werkstoff nach dem Oberbegriff des Patentanspruchs 1 sowie ein Verfahren zur Herstellung eines derartigen Rohrkörpers nach dem Oberbegriff des Patentanspruchs 9.

Ein solchen Rohrkörper und ein solches Verfahren sind aus Dokument DE-C-44 08 444 bekannt.

Rotationssymmetrische Rohre werden als Strukturbauteile zur Übertragung von Kräften sowie als Rohrleitung für das Befördern gasförmiger oder flüssiger Medien eingesetzt. Stets unterliegt der Rohrkörper einer mechanischen Belastung, die durch Biegung, Torsion, Zug, Druck oder Innendruck oder einer Kombination hieraus gekennzeichnet ist. Technisch relevante Bauteile sind beispielsweise Wellen, Rohrleitungen, Druckbehälter, Träger und Zylinder. Sollen derartige Rohrkörper aus einem faserverstärkten Werkstoff hergestellt werden, ist einer Orientierung der Fasern in Richtung der Normalspannungen der Vorzug zu geben. Daher ergibt sich bei Vorhandensein von Torsions- oder Innendruckbelastung oder radialen Belastungen eine ideale Faserausrichtung, die von der Rotationsachse des Rohrkörpers abweicht. Als technisch sinnvoller Faserwinkel +/-α ist ein Winkel von 5°<α<70° bezogen auf die Rotationsachse anzusehen, wenn Torsions-, Innendruck- oder kombinierte Belastungen vorliegen. Als Faserwerkstoff werden Fasern aus Keramik, Metall, Polymer oder Glas mit einem Durchmesser zwischen 4 und 500 µm und einer Länge, die mindestens dem 100-fachen Durchmesser entspricht, verstanden, und der mit einem Volumenanteil zwischen 2 und 70% im Werkstoff vorliegt. Der Werkstoff, in dem die Fasern eingebettet sind, ist ein Polymer, Metall oder eine Keramik und wird allgemein als Matrix bezeichnet.

Wird für einen Rohrkörper ein mit Fasern verstärkter Werkstoff verwendet, der eine große Diskrepanz der zulässigen mechanischen Dehnungen in Faserrichtung und senkrecht zur Faserrichtung aufweist, dann führt ein integraler Aufbau des +/-α-Verbundes zu einem Versagen einzelner Faserlagen in Richtung der geringeren Bruchdehnung, während von anderen Lagen noch nicht das volle Festigkeitspotenzial ausgeschöpft ist. Dies ist insbesondere, jedoch nicht ausschließlich, bei faserverstärkten Metallen der Fall. Weiterhin können thermische Spannungen, die während der Herstellung des faserverstärkten Werkstoffes auftreten können, durch das Zusammenfügen von Faserlagen unterschiedlicher Ausrichtung zu einer Vorbelastung des Werkstoffes führen, die die spätere Belastbarkeit des Rohrkörpers reduziert. Bei Verwendung von Faserlagen einheitlicher Ausrichtung und duktilen Matrixwerkstoffen, insbesondere Metallen, ist eine Reduktion der thermischen Spannungen durch eine mechanische Vorbehandlung möglich. Das Vorhandensein von Faserlagen unterschiedlicher Ausrichtung verhindert jedoch eine derartige Vorbehandlung.

Die Erfindung betrifft einen Rohrkörper aus einem faserverstärkten Werkstoff, der diese Nachteile nicht aufweist, sondern das Festigkeitspotenzial eines faserverstärkten Werkstoffs mit unterschiedlicher Bruchdehnung in Faserrichtung und senkrecht hierzu besser ausnutzt, die Vorbelastung durch thermische Spannungen reduziert und die Möglichkeit bietet, den Werkstoff einer mechanischen Vorbehandlung zu unterziehen, die darauf abzielt, die Werkstoffeigenschaften zu verbessern.

Bisherige rotationssymmetrische Rohrkörper aus faserverstärkten Werkstoffen sind beschrieben in dem Buch "Verarbeiten und Anwenden kohlenstofffaserverstärkter Kunststoffe", Düsseldorf: VDI-Verl. 1981 im Kapitel "Kardanwellen in CFK- und Hydridbauweise" von Christoph Rüegg auf Seiten 199-229. Diese Rohrkörper zeichnen sich dadurch aus, dass zur Aufnahme von Torsionsmomenten oder Innendrücken oder Kombinationen hiervon mit anderen Belastungsarten, die Fasern in einem Winkel von +α und - α bezogen auf die Rotationsachse des Rohrkörpers ausgerichtet sind, wobei die Faserlagen unterschiedlicher Ausrichtung direkt miteinander verbunden sind und 0°<α<90° gegeben ist. Ein derartiger Aufbau wird insbesondere für Rohrkörper aus faserverstärkten Kunststoffen regelmäßig eingesetzt. Wird ein mit Fasern verstärkter Werkstoff verwendet, der eine große Diskrepanz zwischen der zulässigen mechanischen Dehnungen in Faserrichtung und senkrecht zur Faserrichtung aufweist, dann führt ein integraler Aufbau des +/-α-Verbundes zu einem Versagen einzelner Faserlagen in Richtung der geringeren Bruchdehnung, während von anderen Lagen noch nicht das volle Festigkeitspotenzial ausgeschöpft ist. Dieser Effekt wird weiter unten anhand eines Beispieles erläutert.

Der Erfindung liegt die Aufgabe zugrunde, einen Rohrkörper aus einem faserverstärkten Werkstoff zu schaffen, bei dem eine optimale Nutzung der Faserverstärkung erfolgt.

Die Lösung dieser Aufgabe geschieht erfindungsgemäß mit den Merkmalen des Patentanspruchs 1 und bei dem Herstellungsverfahren mit den Merkmalen des Patentanspruchs 9.

Der erfindungsgemäße Rohrkörper besteht aus mindestens zwei Hohlkörpern oder einem Hohlkörper und einem Vollkörper aus mit Fasern verstärktem Werkstoff, die gegensinnig schraubenförmig faserverstärkt sind und derart montiert werden, dass die Faserverstärkung optimal zur Kraftübertragung genutzt wird. Die optimale Nutzung der Faserverstärkung wird dadurch erreicht, dass die Hohlkörper mit einem Torsionsmoment vorgespannt sind. Zwei ineinander gesteckte Hohlkörper sind an einem Ende miteinander verbunden und dann an dem anderen Ende relativ zueinander verdreht (tordiert) und dort ebenfalls verbunden, so dass sie ein Vorspannmoment erhalten. Dieses Vorspannmoment ist im Idealfall so bemessen, dass der faserverstärkte Werkstoff in allen Raumrichtungen einer Belastung unterliegt, die proportional zur richtungsabhängigen Festigkeit des Werkstoffs ist.

Der erfindungsgemäße Rohrkörper besteht vorzugsweise aus Metall mit eingebetteten Keramikfasern. Er hat sich insbesondere bei Titanlegierungen, die mit Keramikfasern verstärkt sind, als vorteilhaft erwiesen. Grundsätzlich ist die Erfindung aber auch bei nicht-metallischen Werkstoffen anwendbar. Ferner ist sie nicht auf ein bestimmtes Fasermaterial beschränkt.

Im Folgenden werden unter Bezugnahme auf die Zeichnungen Ausführungsbeispiele der Erfindung näher erläutert.

Es zeigen:
- Fig. 1: eine perspektivische Darstellung eines Ausschnittes eines Rohrkörpers, der nicht erfindungsgemäß ausgebildet ist und lediglich der Erläuterung der Kraftkomponenten gemäß Tabelle 1 dient,
- Fig. 2: eine Ausführungsform eines Rohrkörpers mit zwei Krafteinleitungselementen an den Enden,
- Fig. 3: eine Ausführungsform, bei dem die Hohlkörper über die Krafteinleitungselemente hinausragen,
- Fig. 4: einen Teil der Länge des erfindungsgemäßen Rohrkörpers in stufenweise aufgeschnittener Darstellung,
- Fig. 5: in perspektivischer Darstellung den Aufbau des erfindungsgemäßen Rohrkörpers unter Angabe der auftretenden Kräfte, und
- Fig. 6: eine Ausführungsform mit einem vollen Kern, auf dem ein Hohlkörper, der Verstärkungsfasern enthält, mit Torsionsspannung montiert ist.

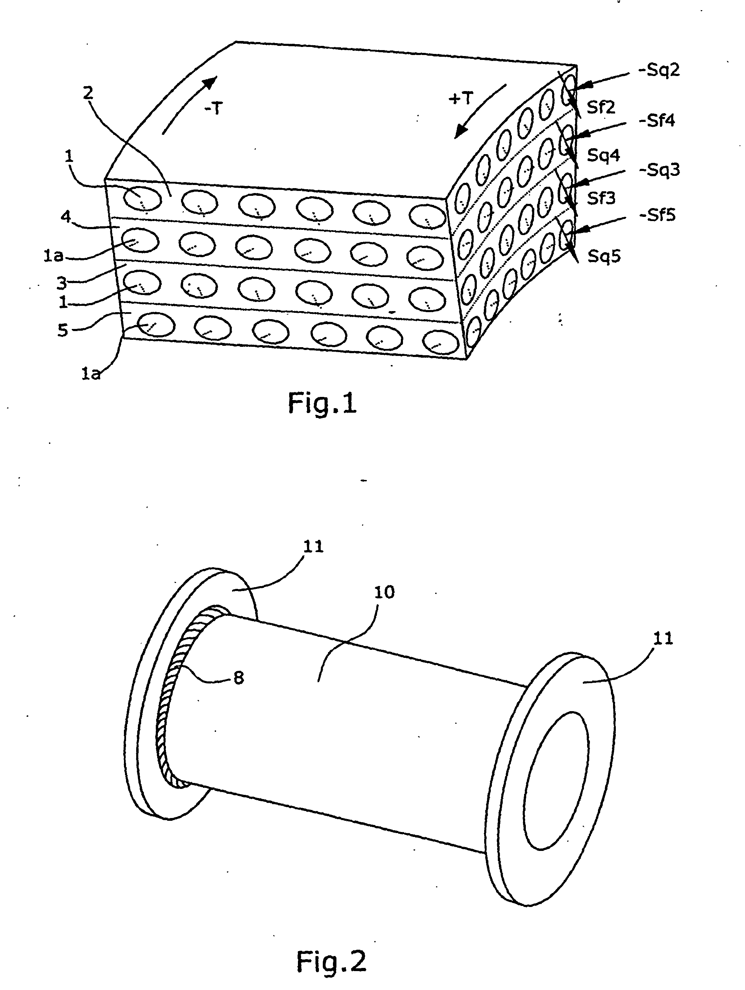

Figur 1 zeigt beispielhaft einen Ausschnitt aus einem Rohrkörper aus einem faserverstärkten Werkstoff, wie er dem Stand der Technik entspricht. Die Fasern 1 sind in diesem Fall in vier Faserlagen 2-5 angeordnet, wobei die Fasern innerhalb jeder Lage parallel ausgerichtet sind. Innerhalb der einzelnen Faserlagen sind die Fasern in Faserlage 2 und 3 im Winkel +45° und in Faserlage 4 und 5 im Winkel -45° bezogen auf die Rotationsachse des Rohrkörpers ausgerichtet. Wird der Rohrkörper mit einem Drehmoment T mit der in Figur 1 gezeigten Orientierung belastet, verursacht dies in den Verstärkungsfasern in den Faserlagen 2 und 3 eine Zugkraft Sf2 und Sf3, während in Faserlagen 4 und 5 eine Druckkraft -Sf4 und -Sf5 auf die Verstärkungsfasern übertragen wird. Andererseits wird in den Faserlagen 2 und 3 eine Druckkraft -Sq2 und -Sq3 senkrecht auf die Fasern induziert. Analog unterliegen die Fasern in den Faserlagen 4 und 5 der Zugkraft Sq4 und Sq5 in der Senkrechten zur Faserrichtung. Die Aufteilung der Kräfte ist abhängig von der richtungsabhängigen Steifigkeit des Werkstoffs. Verbundwerkstoffe mit geringerer Bruchdehnung in senkrechter Richtung zur Faser als in Faserrichtung, wie dies insbesondere faserverstärkte Metalle darstellen, werden zuerst unter der Zugkraft Sq4 und Sq5 versagen. In Tabelle I sind beispielhaft die sich aus den Kräften ergebenden Dehnungen zusammen mit den maximal zulässigen Dehnungen aufgeführt, wie sie beispielsweise für Siliziumkarbid-faserverstärktes Titan gelten könnten. Es wird deutlich, dass in diesem Fall der Werkstoff unter den sich aus den Kräften Sq4 und Sq5 ergebenden Dehnungen bei der gegebenen Torsionsbelastung versagen würde, während die anderen Dehnungen noch weit unterhalb der zulässigen Werte liegen. Thermische Spannungen sind hier nicht berücksichtigt. Sie können die Belastbarkeit noch weiter reduzieren.

**Tabelle I:**

| **Werkstoffdehnungskomponenten, die sich bei einer durch das Torsionsmoment T verursachten Verzerrung von γ=0,008 aus den Kraftkomponenten in Faserrichtung und senkrecht hierzu ergeben. Der Ausnutzungsgrad gibt das Verhältnis von wirklicher Dehnung zur zulässigen Dehnung an.** | | | |
|---|---|---|---|
| Kraftkomponente | Dehnungskomponente | Zulässige Dehnung | Ausnutzungsgrad |
| Sf2; Sf3 | εf = 0,0057 | -0,01<εf<0,01 | 0,57 |
| -Sq2; -Sq3 | εq = 0,0057 | -0,01<εq<0,003 | 0,57 |
| -Sf4; -Sf5 | εf = 0,0057 | -0,01<εf<0,01 | 0,57 |
| Sq4; Sq5 | εq = 0,0057 | -0,01<εq<0,003 | 1,905 |

Der erfindungsgemäße Aufbau eines Rohrkörpers aus einem faserverstärkten Werkstoff besteht nun darin, den Nachteil der geringen Ausnutzung des Festigkeitspotenzials von faserverstärkten Werkstoffen, die eine große Diskrepanz zwischen den zulässigen mechanischen Dehnungen in Faserrichtung und senkrecht zur Faserrichtung aufweisen, zu umgehen, dadurch, dass mindestens zwei Hohlkörper aus einem mit Fasern verstärkten Werkstoff, die gegensinnig spiralförmig faserverstärkt sind, derart montiert werden, dass die Faserverstärkung optimal zur Kraftübertragung genutzt wird. Die optimale Nutzung der Faserverstärkung wird dadurch erreicht, dass die Hohlkörper bei der Montage mit einem Vorspannmoment versehen werden, das so bemessen ist, dass der faserverstärkte Werkstoff in allen Raumrichtungen einer Belastung unterliegt, die im Idealfall proportional zur richtungsabhängigen Festigkeit des Werkstoffs ist. Der Aufbau und die Wirkungsweise werden im Folgenden beschrieben.

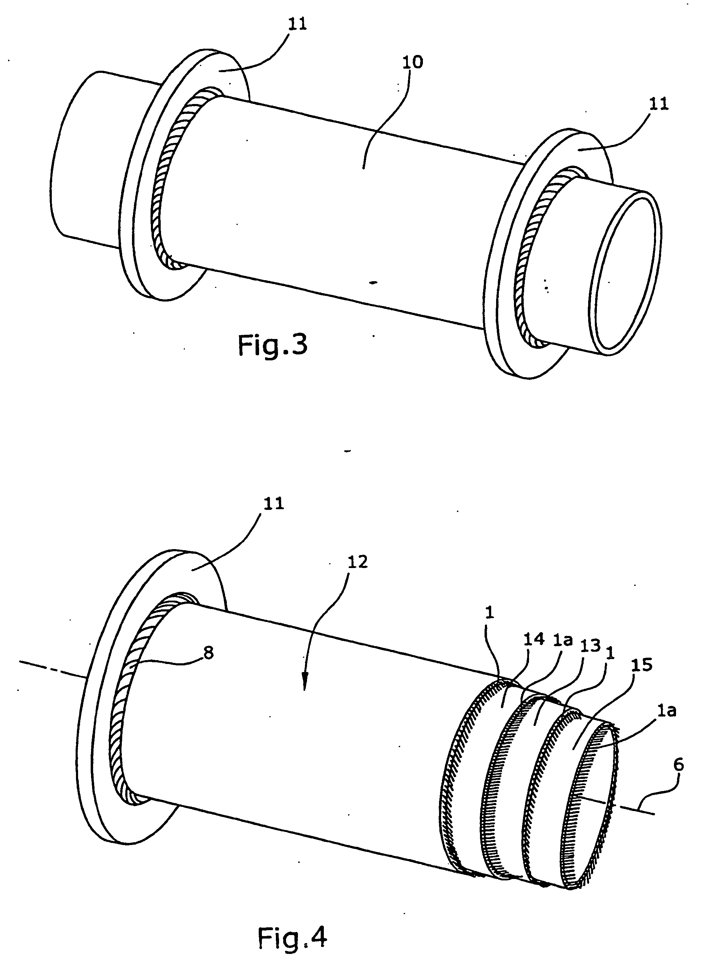

Figur 2 zeigt eine mögliche Ausführungsvariante eines Rohrkörpers aus faserverstärktem Werkstoff, bei der sich Krafteinleitungselemente 11 an den beiden Enden des Rohrkörpers 10 befinden und mit Schweißnähten 8 befestigt sind. Figur 3 zeigt eine weitere Ausführungsvariante eines Rohrkörpers aus faserverstärktem Werkstoff, bei der der zylindrische Teil des Rohrkörpers 10, bestehend aus einem mit Fasern verstärktem Werkstoff über die beiden angeschweißten Krafteinleitungselemente 11 hinausragt.

Figur 4 zeigt beispielhaft einen zur klareren Darstellung stufenweise aufgeschnittenen Rohrkörper 10 mit erfindungsgemäßem Aufbau. An den Krafteinleitungselementen 11 wird die Kraft übertragen. Der faserverstärkte Mittelteil besteht hier beispielhaft aus vier Hohlkörpern 12,13,14,15, die in +45°-Richtung (Hohlkörper 12 und 13) und -45°-Richtung (Hohlkörper 14 und 15) bezogen auf die Rotationsachse 6 mit Fasern 1 und 1a verstärkt sind. In benachbarten Hohlkörpern sind die Fasern gegensinnig gewickelt. Die einzelnen Hohlkörper sind ausschließlich im Bereich der Krafteinleitungselemente 11 miteinander stoff-, form- oder reibschlüssig verbunden. Außerhalb dieser Bereiche sind die Hohlkörper stofflich voneinander getrennt oder derart miteinander verbunden, dass das Vorspannmoment erhalten bleibt.

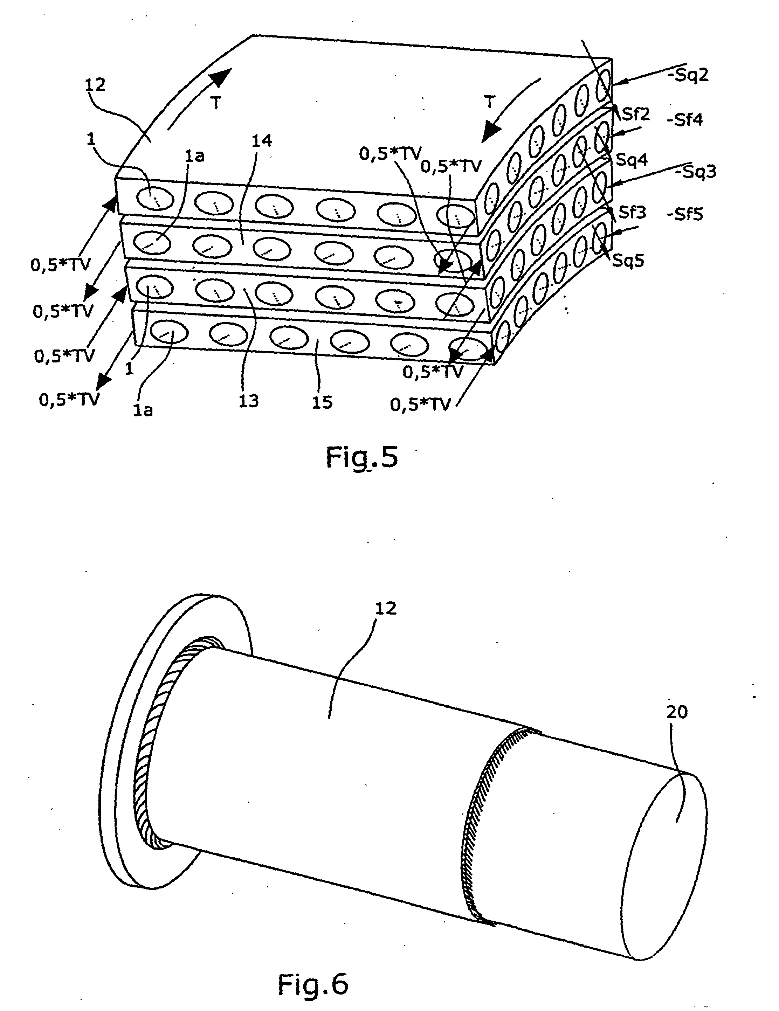

Die erfindungsgemäße Wirkungsweise des Vorspannmoments wird anhand Figur 5 beispielhaft erläutert, die einen Ausschnitt aus dem zylindrischen Mittelteil des in Figur 4 gezeigten Rohrkörpers darstellt. Die vier Hohlkörper 12 bis 15 sind in diesem Bereich stofflich voneinander getrennt. Der Grundgedanke besteht nun darin, die durch die unterschiedlichen Bruchdehnungen in Faserrichtung und senkrecht hierzu verursachten Nachteile zu umgehen, indem die Hohlkörper 12 und 13, die rechtsgängig gewickelte Fasern 1 enthalten, mit einem Vorspannmoment Tv gegen die Hohlkörper 14 und 15, die linksgängig gewickelte Fasern 1a enthalten, vorgespannt werden. In Figur 5 ist der Einfluss des Vorspannmomentes Tv auf die lokalen Faserkräfte und in Tabelle II auf die Faserdehnungen dargestellt.

**Tabelle II:**

| **Werkstoffdehnungskomponenten, die sich bei einer durch das Torsionsmoment T verursachten Verzerrung von γ=0,008 aus den Kraftkomponenten in Faserrichtung und senkrecht hierzu ergeben. Hier sind die Hohlkörper mit einem Vorspannmoment Tv vorgespannt, das eine Verzerrung von γ=0,005 ergibt.** | | | |
|---|---|---|---|
| Kraftkomponente | Dehnungskomponente | Zulässige Dehnung | Ausnutzungsgrad |
| Sf2; Sf3 | εf = 0,0092 | -0,01<εf<0,01 | 0,92 |
| - Sq2; -Sq3 | εq = 0,0092 | -0,01<εq<0,003 | 0,92 |
| - Sf4; -Sf5 | εf = 0,0022 | -0,01<εf<0,01 | 0,22 |
| Sq4; Sq5 | εq = 0,0022 | -0,01<εq<0,003 | 0,73 |

In Figur 5 ist ersichtlich, dass die Kräfte Sq4 und -Sf4 im Hohlkörper 14 und die Kräfte Sq5 und -Sf5 im Hohlkörper 15 durch das Vorspannmoment Tv reduziert werden, während die Kräfte -Sq2 und Sf2 im Hohlkörper 12 und -Sq3 und Sf3 im Hohlkörper 13 sich vergrößern. Das Vorspannmoment Tv kann so bemessen werden, dass die einzelnen Faserlagen proportional mit dem Drehmoment T bis zur jeweiligen maximal zulässigen Spannung belastet werden. Das Verhältnis zwischen der Bruchdehnung in Faserrichtung und senkrecht hierzu ist der wesentliche Parameter für die Ermittlung des optimalen Vorspannmomentes Tv. Bei dem in Tabelle II gezeigten Beispiel werden die einzelnen Faserlagen besser ausgelastet, wodurch das ertragbare Torsionsmoment T um 119% gegenüber dem in Tabelle I aufgeführten Beispiel des Standes der Technik erhöht werden kann. Die bei dem in Tabelle I aufgeführten Beispiel unter den Kraftkomponenten Sq4 und Sq5 versagenden Faserlagen 4 und 5 sind bei dem in Tabelle II aufgeführten Beispiel wesentlich weniger belastet, wodurch die höhere Gesamtbelastbarkeit des erfindungsgemäßen Rohrkörpers erreicht wird. Unter Berücksichtigung thermischer Spannungen zwischen den Faserlagen und der Möglichkeit der Werkstoffoptimierung durch mechanische Vorbehandlung der Hohlkörper kann die erreichbare Verbesserung noch deutlich höher ausfallen.

Weiterhin entspricht es der erfindungsgemäßen Ausführung eines Rohrkörpers aus einem faserverstärkten Werkstoff, dass die Anzahl, Wandungsdicke, Faserausrichtung und der Faservolumengehalt der einzelnen Hohlkörper unterschiedlich und den Belastungsverhältnissen angepasst sind. Beispielsweise kann bei ausschließlicher Belastung in einer Richtung der Anteil der Hohlkörper mit paralleler Faserausrichtung in einer Richtung größer sein, als der mit gegensinniger Faserausrichtung.

Eine weitere erfindungsgemäße Ausführung eines Rohrkörpers aus einem faserverstärkten Werkstoff besteht darin, dass nur ein Teil der mindestens zwei Hohlkörper eine Faserverstärkung aufweist. Bei dieser Ausführungsvariante kann der innerste nicht faserverstärkte Hohlkörper auch durch einen nicht hohlen sondern stabformigen Körper ersetzt werden. Figur 6 zeigt diese Ausführungsvariante beispielhaft, bei der der innere Körper 20 aus einem nicht faserverstärkten Werkstoff besteht und von einem Hohlkörper 12 aus einem mit Fasern verstärktem Werkstoff umgeben ist, der mit dem Vorspannmoment montiert ist.

Die Erfindung betrifft auch die Möglichkeit, Hohlkörper aus einem duktilen Werkstoff, insbesondere einem Metall, die mit Fasern verstärkt sind, vor der Montage zum Rohrkörper einer mechanischen Behandlung, mit oder ohne zusätzliche Einwirkung von Wärmeenergie, zu unterziehen, die darauf abzielt, herstellungsbedingte thermische Spannungen zu reduzieren. Hierdurch ergibt sich eine höhere Belastbarkeit des Werkstoffs gegenüber dem Zustand direkt nach der Herstellung.

Zur Herstellung eines Rohrkörpers aus einem faserverstärkten Werkstoff werden zunächst die Hohlkörper gefertigt und eventuell einer mechanischen Vorbehandlung unterzogen. Diese werden im Bereich einer Krafteinleitung durch Stoff-, Form- oder Reibschluss miteinander verbunden. Anschließend wird durch eine geeignete Vorrichtung das zuvor ermittelte Torsions-Vorspannmoment Tv auf die einzelnen Hohlkörper aufgebracht. Dann werden an mindestens einer weiteren Krafteinleitungsstelle die Hohlkörper miteinander durch Stoff-, Form- oder Reibschluss verbunden. Im übrigen, noch nicht verbundenen Bereich können die Hohlkörper stofflich voneinander getrennt bleiben oder durch ein Fügeverfahren, das das Vorspannmoment erhält, ebenfalls verbunden werden.

## Patentansprüche

1. Rohrkörper aus einem faserverstärkten Werkstoff, wobei mindestens zwei rotationssymmetrische Hohlkörper (12,13,14,15) oder ein Hohlkörper und ein Vollkörper unterschiedlichen Durchmessers ineinander gesteckt und miteinander verbunden sind, wobei mindestens einer der Hohlkörper (12,13,14,15) aus einem mit schraubenförmig verlaufenden Fasern (1,1a) verstärkten Werkstoff besteht
**dadurch gekennzeichnet , dass** die bzw. der Hohlkörper (12,13,14,15) mit einem Torsionsmoment vorgespannt sind.

2. Rohrkörper nach Anspruch 1, **dadurch gekennzeichnet, dass** die Verstärkungsfasern der einzelnen Hohlkörper (12,13,14,15) parallel zu der Mantellinie eines koaxial zu dem Hohlkörper (12,13,14,15) ausgerichteten Zylinders verlaufen.

3. Rohrkörper nach Anspruch 1 oder 2, **dadurch gekennzeichnet, dass** die Ausrichtungen der Verstärkungsfasern in benachbarten Hohlkörpern jeweils gegensinnig sind.

4. Rohrkörper nach einem der Ansprüche 1-3, **dadurch gekennzeichnet, dass** die Verstärkungsfasern der mit Fasern (1,1a) verstärkten Hohlkörper (12,13,14,15) parallel bezogen auf die Mantelfläche eines Zylinders ausgerichtet sind.

5. Rohrkörper nach einem der Ansprüche 1-4, **dadurch gekennzeichnet, dass** in dem innersten Hohlkörper ein Vollkörper aus einem nicht faserverstärktem Werkstoff angeordnet ist.

6. Rohrkörper nach einem der Ansprüche 1-5, **dadurch gekennzeichnet, dass** die Hohlkörper (12,13,14,15) nur im Bereich der Krafteinleitungen stoff-, form- oder reibschlüssig miteinander verbunden sind.

7. Rohrkörper nach einem der Ansprüche 1-5, **dadurch gekennzeichnet, dass** die Hohlkörper (12,13,14,15) über die gesamte Länge stoff-, form- oder reibschlüssig miteinander verbunden sind.

8. Rohrkörper nach einem der Ansprüche 1-5, **dadurch gekennzeichnet, dass** in benachbarten Hohlkörpern die Fasern entgegengesetzten Wickelsinn haben und die Richtung der Vorspannung dem Wickelsinn entspricht.

9. Verfahren zur Herstellung eines Rohrkörpers nach einem der Ansprüche 1-8, wobei mindestens zwei rotationssymmetrische Hohlkörper oder ein Hohlkörper und ein Vollkörper unterschiedlichen Durchmessers ineinander gesteckt werden, **dadurch gekennzeichnet, dass** die mindestens zwei rotationssymmetrischen Hohlkörper (12,13,14,15) oder der Hohlkörper und der Vollkörper an einem Ende miteinander verbünden werden und dass die anderen Enden gegensinnig zueinander verdreht werden bzw. das andere Ende des Hohlkörpers in Bezug auf das andere Ende des Vollkörpers verdreht wird und dann diese anderen Enden miteinander verbunden werden, so dass die bzw. der Hohlkörper durch ein Torsionsmoment vorgespannt werden

10. Verfahren zur Herstellung eines Rohrkörpers nach einem der Ansprüche 1-8, **dadurch gekennzeichnet, dass** vor der Montage gemäß Anspruch 9 die Hohlkörper einer mechanischen, thermischen oder kombinierten Vorbehandlung unterzogen werden, die der Einstellung eines optimierten Eigenspannungszustandes oder Gefüges dient.

## Claims

1. Tubular body of fiber-reinforced material, wherein at least two rotation-symmetric hollow bodies (12, 13, 14, 15) or one hollow body and one solid body of different diameters are nested and connected with each other, at least one of said hollow bodies (12, 13, 14, 15) consisting of a material reinforced with helically extending fibers (1, 1a),
**characterized in**
**that** the hollow bodies or the hollow body (12, 13, 14, 15) are biased by a torsional moment.

2. Tubular body of claim 1, **characterized in that** the reinforcing fibers of the individual hollow bodies (12, 13, 14, 15) extend in parallel to the generatrix of a cylinder disposed coaxially with respect to the hollow body (12, 13, 14, 15).

3. Tubular body of claim1 or 2, **characterized in that** the reinforcement fibers in adjacent hollow bodies are oriented in opposite directions, respectively.

4. Tubular body of one of claims 1-3, **characterized in that** the reinforcing fibers of the hollow bodies (12, 13, 14, 15) reinforced with fibers (1, 1a) are oriented in parallel with respect to the generated surface of a cylinder.

5. Tubular body of one of claims 1-4, **characterized in that** a solid body of a non-fiber-reinforced material is provided in the innermost hollow body.

6. Tubular body of one of claims 1-5, **characterized in that** the hollow bodies (12, 13, 14, 15) are materially, positively or frictionally bonded only in the region of force transmissions.

7. Tubular body of one of claims 1-5, **characterized in that** the hollow bodies (12, 13, 14, 15) are materially, positively or frictionally bonded over their entire length.

8. Tubular body of one of claims 1-5, **characterized in that** the fibers in adjacent hollow bodies are wound in opposite directions and the biasing direction corresponds to the winding direction.

9. Method for manufacturing a tubular body of one of claims 1-8, wherein at least two rotation-symmetric hollow bodies or one hollow body and one solid body of different diameters are nested,
**characterized in**
**that** the at least two rotation-symmetric hollow bodies (12, 13, 14, 15) or the hollow body and the solid body are connected at one end and the other ends are twisted in opposite directions or the other end of the hollow body is twisted with respect to the other end of the solid body, whereupon these ends are connected with each other so that the hollow bodies or the hollow body are/is biased by a torsional moment.

10. Method for manufacturing a tubular body of one of claims 1-8, **characterized in that**, prior to the assembly according to claim 9, the hollow members are subjected to a mechanical, thermal or a combined pretreatment serving to set an optimized residual stress condition or structure.

## Revendications

1. Corps tubulaire fait d'un matériau renforcé par des fibres, dans lequel au moins deux corps creux (12, 13, 14, 15) à symétrie de rotation, ou un corps creux et un corps plein de diamètre différent, sont enfichés l'un dans l'autre, au moins l'un des corps creux (12, 13, 14, 15) étant constitué d'un matériau renforcé par des fibres (1, 1a) s'étendant de manière hélicoïdale, **caractérisé en ce que** le ou les corps creux (12, 13, 14, 15) sont précontraints avec un couple de torsion.

2. Corps creux selon la revendication 1, **caractérisé en ce que** les fibres de renforcement des divers corps creux (12, 13, 14, 15) s'étendent parallèlement à la génératrice d'un cylindre orienté coaxialement par rapport au corps creux (12, 13, 14, 15).

3. Corps tubulaire selon la revendication 1 ou 2, **caractérisé en ce que** les orientations des fibres de renforcement dans les corps creux voisins sont à chaque fois réalisés en sens opposé.

4. Corps tubulaire selon l'une quelconque des revendications 1 à 3, **caractérisé en ce que** les fibres de renforcement des corps creux (12, 13, 14, 15) renforcés par des fibres (1, 1a) sont orientées parallèlement par rapport à la génératrice d'un cylindre.

5. Corps tubulaire selon l'une quelconque des revendications 1 à 4, **caractérisé en ce que** dans le corps creux situé le plus à l'intérieur est disposé un corps plein fait d'un matériau non renforcé par des fibres.

6. Corps tubulaire selon l'une quelconque des revendications 1 à 5, **caractérisé en ce que** les corps creux (12, 13, 14, 15) sont reliés entre eux - par complémentarité de matière, de forme ou de friction - seulement à proximité des introductions de force.

7. Corps tubulaire selon l'une quelconque des revendications 1 à 5, **caractérisé en ce que** les corps creux (12, 13, 14, 15) sont reliés entre eux - par complémentarité de matière, de forme ou de friction - sur toute la longueur.

8. Corps tubulaire selon l'une quelconque des revendications 1 à 5, **caractérisé en ce que** dans les corps creux voisins les fibres présentent un sens d'enroulement opposé, et la direction de la précontrainte correspond au sens d'enroulement.

9. Procédé de fabrication d'un corps tubulaire selon l'une quelconque des revendications 1 à 8, dans lequel au moins deux corps creux à symétrie de rotation ou un corps creux et un corps plein de diamètre différent sont enfichés l'un dans l'autre, **caractérisé en ce que** les au moins deux corps creux à symétrie de rotation (12, 13, 14, 15) ou le corps creux et le corps plein sont reliés entre eux à une extrémité, et **en ce que** les autres extrémités sont tordues en sens opposé l'une par rapport à l'autre - ou l'autre extrémité du corps creux est tordue par rapport à l'autre extrémité du corps plein - et ensuite ces autres extrémités sont reliées l'une à l'autre, de telle sorte que le ou les corps creux sont précontraints par un couple de torsion.

10. Procédé de fabrication d'un corps tubulaire selon l'une quelconque des revendications 1 à 8, **caractérisé en ce que**, avant le montage selon la revendication 9, les corps creux sont soumis à un traitement préalable mécanique, thermique ou combiné qui sert à ajuster un état de contrainte propre optimisé ou une structure optimisée.
